# EUROPEAN PATENT APPLICATION

(11) **EP 4 560 821 A1**
(43) Date of publication of application: **28.05.2025**
(21) Application number: 23856304.3
(22) Date of filing: 30.06.2023
(51) Int. Cl.: H01M 50/547, H01M 50/552, H01M 50/148

(54) **BATTERY COVER PLATE ASSEMBLY, BATTERY, AND POWER SYSTEM**

(30) Priority: 22.08.2022 CN 202211007749
(71) Applicant: Huawei Technologies Co., Ltd., Shenzhen, Guangdong 518129 (CN)
(72) Inventor: HUANG, Da, Shenzhen, Guangdong 518129 (CN); JIANG, Xi, Shenzhen, Guangdong 518129 (CN); YANG, Jixiang, Shenzhen, Guangdong 518129 (CN); HU, Guanlun, Shenzhen, Guangdong 518129 (CN)
(74) Representative: Isarpatent
(86) International application number: PCT/CN2023/104949
(87) International publication number: WO 2024/041214

(57) **Abstract**

This application provides a battery cover plate assembly, a battery, and a power system, and relates to the field of battery technologies, to resolve a problem of poor anti-torsion performance of a pole. The battery cover plate assembly provided in this application may include a cover plate, a pole, and an injection molding part. The cover plate is provided with a first plate surface and a second plate surface away from the first plate surface. In addition, the cover plate is further provided with a through hole that passes through the first plate surface and the second plate surface, and an inner wall of the through hole is provided with a first anti-rotation surface. The pole penetrates through the through hole, and an outer circumferential surface of the pole is provided with a second anti-rotation surface. The injection molding part is fastened to the cover plate and the pole, and covers at least the first anti-rotation surface and the second anti-rotation surface, to effectively position the pole in a circumferential direction. In the battery cover plate assembly provided in this application, in the circumferential direction, the cover plate can effectively position the pole by using the injection molding part, and anti-torsion performance of the pole can be significantly improved.

## Description

### CROSS-REFERENCE TO RELATED APPLICATIONS

This application claims priority to Chinese Patent Application No. 202211007749.X, filed with the China National Intellectual Property Administration on August 22, 2022 and entitled "BATTERY COVER PLATE ASSEMBLY, BATTERY, AND POWER SYSTEM", which is incorporated herein by reference in its entirety.

### TECHNICAL FIELD

This application relates to the field of battery technologies, and in particular, to a battery cover plate assembly, a battery, and a power system.

### BACKGROUND

With popularization and development of clean energy, batteries start to be widely used in scenarios such as data centers, base stations, mobile phones, and vehicles.

A current battery cover plate assembly may include a cover plate and a pole. Because an injection molding process has advantages such as a simple production process and low production costs, the cover plate and the pole are fastened in an injection molding manner gradually. However, in a current battery cover plate, because there is no proper structure design between a cover plate and a pole, problems such as insufficient injection molding and poor anti-torsion performance of the pole are prone to occur during injection molding, and consequently safety of a battery and reliability of the battery in long-term use are affected. Therefore, how to improve the anti-torsion performance of the pole becomes an urgent technical problem to be resolved.

### SUMMARY

This application provides a battery cover plate assembly, a battery, and a power system that can effectively improve anti-torsion performance of a pole.

According to a first aspect, this application provides a battery cover plate assembly. The battery cover plate assembly may include a cover plate, a pole, and an injection molding part. The cover plate is provided with a first plate surface and a second plate surface away from the first plate surface. In addition, the cover plate is further provided with a through hole that passes through the first plate surface and the second plate surface, and an inner wall of the through hole is provided with a first anti-rotation surface. The pole penetrates through the through hole, and an outer circumferential surface of the pole is provided with a second anti-rotation surface. The injection molding part is fastened to the cover plate and the pole, and covers at least the first anti-rotation surface and the second anti-rotation surface, to effectively position the pole in a circumferential direction, and improve anti-torsion performance of the pole.

It may be understood that, during actual application, poles are usually used in pairs, one is used as a positive pole, and the other is used as a negative pole. Therefore, a quantity of injection molding parts may be the same as a quantity of poles.

In an example, the first anti-rotation surface may be a plane, and an included angle between the first anti-rotation surface and the inner wall of the through hole may be less than 180°, to ensure that the through hole has a large enough cross-sectional area, so that the pole can smoothly penetrate through. The included angle between the first anti-rotation surface and the inner wall of the through hole is an included angle between the first anti-rotation surface and a section of the inner wall of the through hole at a junction of the first anti-rotation surface and the inner wall of the through hole. Certainly, during specific implementation, the included angle between the first anti-rotation surface and the inner wall of the through hole may be flexibly set based on an actual requirement.

In an example, at least one end of the through hole may be provided with a chamfer, and a bonding area between the through hole and the injection molding part may be increased by providing the chamfer, so that stability of a connection between the injection molding part and the cover plate can be effectively improved.

In an example, the first plate surface of the cover plate may be provided with a counterbore, and the injection molding part may also be located in the counterbore, so that a bonding area between the injection molding part and the cover plate can be increased. This helps ensure the stability of the connection between the injection molding part and the cover plate.

A side wall of the counterbore may be provided with a recess portion. After the injection molding part is located in the recess portion, a clamping connection can be further formed between the injection molding part and the counterbore, so that strength of a connection between the injection molding part and the counterbore can be effectively improved.

In an example, the first plate surface may be further provided with a boss, the through hole passes through the boss, and the injection molding part covers the boss, so that after the injection molding part covers the boss, the bonding area between the injection molding part and the cover plate can be increased. This helps ensure the stability of the connection between the injection molding part and the cover plate.

When the pole is disposed, the pole may include a pole body, a first pole segment is disposed at a first end of the pole body, a second pole segment is disposed at a second end, a shrinking portion is provided between the first pole segment and the second pole segment, and the injection molding body covers the shrinking portion. After the injection molding body covers the shrinking portion, a clamping connection can be further formed between the injection molding part and the pole, so that strength of the connection between the injection molding part and the counterbore pole in an axial direction can be effectively improved.

During specific setting, the second anti-rotation surface may be located on an outer circumferential surface of the first pole segment, or may be located on an outer circumferential surface of the shrinking portion.

In an example, the pole may further include a base, and the base is located at the second end of the pole body.

During specific setting, a sealing ring may be sleeved on a periphery of the second pole segment, and a thickness of the sealing ring is greater than a length of the second pole segment, so that a creepage distance between the pole and the cover plate can be increased.

One side of the sealing ring may be sealed and attached to a surface of the base, and the other side may be sealed and attached to the cover plate, so that sealing between the pole and the cover plate can be ensured.

In an example, the battery cover plate assembly may further include an isolation ring, and the isolation ring may be located on the second plate surface, so that electrical insulation of the cover plate can be improved.

According to a second aspect, this application further provides a battery. The battery may include a housing, a jelly roll, and any one of the foregoing battery cover plate assemblies, the housing is provided with a groove, the jelly roll is disposed in the groove, the battery cover plate assembly covers an opening of the groove, and the second plate surface faces the groove. In the battery provided in this application, the foregoing battery cover plate assembly is used, so that stability of a connection between the pole and the jelly roll can be improved, and use reliability of the battery can be ensured.

According to a third aspect, this application further provides a power system. The power system may include an inverter and the foregoing battery. The inverter is connected to the battery, and is configured to convert an alternating current into a direct current and then provide the direct current for the battery, or convert a direct current from the battery into an alternating current. During specific application, the power system may be an energy storage system, or may be a solar or wind power system. A specific type of the power system is not limited in this application.

### BRIEF DESCRIPTION OF DRAWINGS

FIG. 1 is a sectional view of a conventional battery according to this application;
FIG. 2 is a sectional view of a conventional battery cover plate assembly according to this application;
FIG. 3 is a diagram of a three-dimensional structure of a battery cover plate assembly according to an embodiment of this application;
FIG. 4 is a diagram of an exploded structure of a battery cover plate assembly according to an embodiment of this application;
FIG. 5 is a locally enlarged view of a part A in FIG. 4;
FIG. 6 is a diagram of a cross section of a display through hole according to an embodiment of this application;
FIG. 7 is another diagram of a cross section of a display through hole according to an embodiment of this application;
FIG. 8 is a diagram of a cross-sectional structure of a counterbore according to an embodiment of this application;
FIG. 9 is a diagram of a partial cross-sectional structure of a battery cover plate assembly according to an embodiment of this application;
FIG. 10 is another diagram of an exploded structure of a battery cover plate assembly according to an embodiment of this application;
FIG. 11 is another diagram of a cross-sectional structure of a battery cover plate assembly according to an embodiment of this application;
FIG. 12 is a diagram of an exploded structure of a battery according to an embodiment of this application;
FIG. 13 is a diagram of a three-dimensional structure of a battery pack according to an embodiment of this application; and
FIG. 14 is a block diagram of a structure of a power system according to an embodiment of this application.

### DESCRIPTION OF EMBODIMENTS

To make objectives, technical solutions, and advantages of this application clearer, the following further describes this application in detail with reference to accompanying drawings.

To facilitate understanding of a battery cover plate assembly provided in embodiments of this application, the following first describes an application scenario of the battery cover plate assembly.

The battery cover plate assembly provided in embodiments of this application may be used in a plurality of different types of batteries.

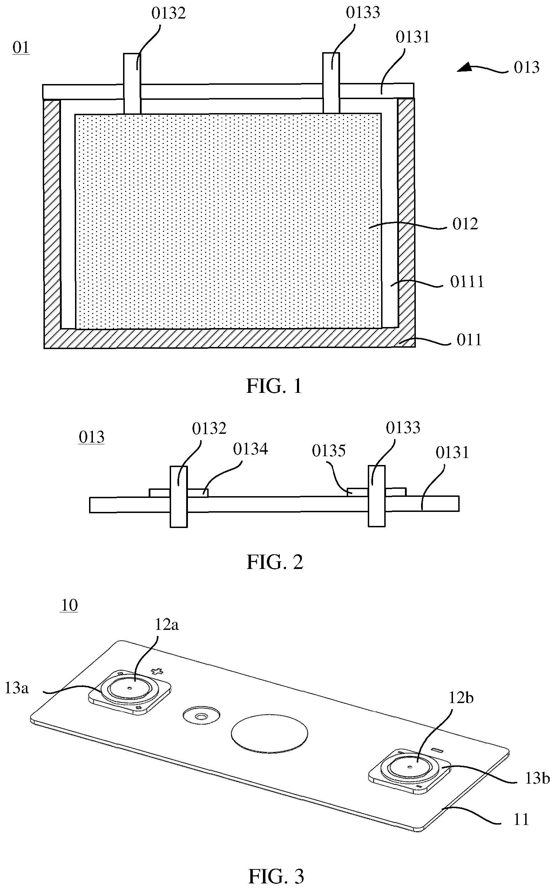

For example, FIG. 1 shows a battery 01 according to an embodiment of this application. The battery 01 may include a housing 011, a jelly roll 012, and a battery cover plate assembly 013. Specifically, the housing 011 is provided with a groove 0111, and the jelly roll 012 is disposed in the groove 0111. The battery cover plate assembly 013 includes a cover plate 0131, a positive pole 0132, and a negative pole 0133. The cover plate 0131 covers an opening of the groove 0111, to ensure sealing of the groove 0111. One end (a lower end in FIG. 1) of the positive pole 0132 may be connected to a positive electrode of the jelly roll 012, and the other end (an upper end in FIG. 1) extends out of the cover plate 0131, to be electrically connected to an external power device. Correspondingly, one end (a lower end in FIG. 1) of the negative pole 0133 may be connected to a negative electrode of the jelly roll 012, and the other end (an upper end in the figure) extends out of the cover plate 0131, to be electrically connected to an external power device. During actual application, the positive pole 0132 and the negative pole 0133 are fastened by using the cover plate 0131. When the positive pole 0132 and the negative pole 0133 are subject to an external force, the cover plate 0131 can prevent the positive pole 0132 and the negative pole 0133 from generating position offsets to some extent, so that use safety of the battery 01 can be ensured.

FIG. 2 is a diagram of a structure of a battery cover plate assembly 013 that is commonly used currently. Specifically, the battery cover plate assembly 013 may include a cover plate 0131, a positive pole 0132, a negative pole 0133, a disc 0134, and a disc 0135. During actual application, the positive pole 0132 is fastened to the cover plate 0131 by using the disc 0134. The positive pole 0132 is of a cylindrical structure. When the positive pole 0132 is subject to a circumferential torsion force, the positive pole 0132 easily rotates, and reliability of an electrical connection between the positive pole 0132 and the jelly roll is affected. Correspondingly, the negative pole 0133 is fastened to the cover plate 0131 by using the disc 0135. The negative pole 0133 is of a cylindrical structure. When the negative pole 0133 is subject to a circumferential torsion force, the negative pole 0133 easily rotates, and reliability of an electrical connection between the negative pole 0133 and the jelly roll is affected. In addition, because materials of the disc 0134 and the disc 0135 are usually metal, insulation processing further needs to be performed between the disc 0134 and the positive pole 0132, and between the disc 0135 and the negative pole 0133.

In summary, in the current battery cover plate assembly 013, anti-torsion performance of the pole is poor. In addition, the pole and the cover plate 0131 need to be fastened by using the disc, and there are problems such as a large quantity of parts and components and a complex manufacturing process.

Therefore, embodiments of this application provide a battery cover plate assembly that is of a simple structure and that can effectively improve anti-torsion performance of a pole.

To make the objectives, technical solutions, and advantages of this application clearer, the following further describes this application in detail with reference to the accompanying drawings and specific embodiments.

Terms used in the following embodiments are merely intended to describe specific embodiments, but are not intended to limit this application. Terms "one", "a", and "this" of singular forms used in this specification and the appended claims of this application are also intended to include expressions such as "one or more", unless otherwise specified contrarily in the context clearly. It may be further understood that, in the following embodiments of this application, "at least one" means one, two, or more.

Reference to "an embodiment" or the like described in this specification means that one or more embodiments of this application include a particular feature, structure, or characteristic described with reference to embodiments. Therefore, in this specification, statements, such as "in an embodiment", "in some embodiments", and "in other embodiments", that appear at different places do not necessarily mean referring to a same embodiment. Instead, the statements mean referring to "one or more but not all of embodiments", unless otherwise specifically emphasized in other manners. Terms "include", "have", and variants of the terms all mean "include but are not limited to", unless otherwise specifically emphasized in other manners.

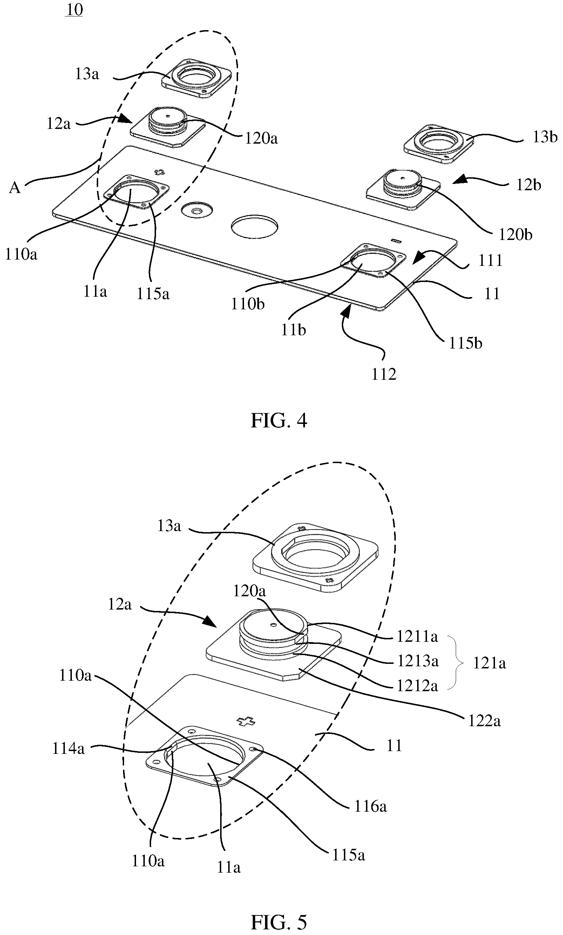

As shown in FIG. 3, in an example provided in this application, a battery cover plate assembly 10 may include a cover plate 11, a positive pole 12a, a negative pole 12b, an injection molding part 13a, and an injection molding part 13b. Specifically, as shown in FIG. 4, the cover plate 11 is provided with a through hole 11a and a through hole 11b, and both the through hole 11a and the through hole 11b pass through a first plate surface 111 and a second plate surface 112 of the cover plate 11. The first plate surface 111 and the second plate surface 112 are plate surfaces of the cover plate 11 that are away from each other. The positive pole 12a penetrates through the through hole 11a, and the negative pole 12b penetrates through the through hole 11b. The injection molding part 13a is configured to be fastened to the cover plate 11 and the positive pole 12a. The injection molding part 13b is configured to be fastened to the cover plate 11 and the negative pole 12b. An inner wall of the through hole 11a is provided with a first anti-rotation surface 110a, and an outer circumferential surface of the positive pole 12a is provided with a second anti-rotation surface 120a. The injection molding part 13a covers at least the first anti-rotation surface 110a, to limit a position of the positive pole 12a in a circumferential direction. In addition, the injection molding part 13a further covers at least the second anti-rotation surface 120a, to limit a position of the cover plate 11 in a circumferential direction, prevent the positive pole 12a from rotating relative to the cover plate 11 in the circumferential direction, and improve anti-torsion performance of the positive pole 12. In addition, an inner wall of the through hole 11b is provided with a first anti-rotation surface 110b, and an outer circumferential surface of the negative pole 12b is provided with a second anti-rotation surface 120b. The injection molding part 13b covers at least the first anti-rotation surface 110b, to limit a position of the negative pole 12b in a circumferential direction. In addition, the injection molding part 13b further covers at least the second anti-rotation surface 120b, to limit a position of the cover plate 11 in a circumferential direction, prevent the negative pole 12b from rotating relative to the cover plate 11 in the circumferential direction, and improve anti-torsion performance of the negative pole 12.

In the battery cover plate assembly 10 provided in this application, the positive pole 12a may be fastened to the cover plate 11 by using the injection molding part 13a, and electrical insulation between the positive pole 12a and the cover plate 11 can also be ensured, thereby helping reduce a quantity of used parts and components. In addition, the first anti-rotation surface 110a and the second anti-rotation surface 120a are used, so that the positive pole 12a can be effectively prevented from rotating in the circumferential direction, and structural stability of the battery cover plate assembly 10 can be improved. Correspondingly, the negative pole 12b may be fastened to the cover plate 11 by using the injection molding part 13b, and electrical insulation between the negative pole 12b and the cover plate 11 can also be ensured, thereby helping reduce a quantity of used parts and components. In addition, the first anti-rotation surface 110b and the second anti-rotation surface 120b are used, so that the negative pole 12b can be effectively prevented from rotating in the circumferential direction, and structural stability of the battery cover plate assembly 10 can be improved.

It should be noted that the first anti-rotation surface 110a and the second anti-rotation surface 120a are surfaces that do not use an axis center of the positive pole 12a as a rotation center. When the positive pole 12a is subject to an external torsion force and generates a rotation trend using the axis center as the rotation center, the torsion force is transferred to the injection molding part 13a by using the second anti-rotation surface 120a, and is transferred to the first anti-rotation surface 110a of the cover plate 11 by using the injection molding part 13a, and the first anti-rotation surface 110a resists the torsion force. Therefore, the positive pole 12a can be prevented from rotating. Correspondingly, the first anti-rotation surface 110b and the second anti-rotation surface 120b are surfaces that do not use an axis center of the negative pole 12b as a rotation center. When the negative pole 12b is subject to an external torsion force and generates a rotation trend using the axis center as the rotation center, the torsion force is transferred to the injection molding part 13b by using the second anti-rotation surface 120b, and is transferred to the first anti-rotation surface 110b of the cover plate 11 by using the injection molding part 13b, and the first anti-rotation surface 110b resists the torsion force. Therefore, the negative pole 12b can be prevented from rotating.

For the injection molding part 13a and the injection molding part 13b, during specific application, materials of the injection molding part 13a and the injection molding part 13b may be insulation materials of polymers such as polypropylene, polyvinylidene difluoride, polyethylene, methyl methacrylate, and polyvinyl acetate, copolymers thereof, and the like, to ensure electrical insulation between the positive pole 12a, the negative pole 12b, and the cover plate 11.

During preparation, components, for example, the cover plate 11, the positive pole 12a, and the negative pole 12b, that need to be connected may be first assembled, and then the injection molding materials are injected into required positions. After the injection molding materials are cooled and molded, the injection molding part 13a and the injection molding part b may be prepared. The injection molding part a and the injection molding part b may be manufactured at the same time, or may be manufactured sequentially.

It may be understood that, during actual application, an appropriate injection molding material and process may be selected based on an actual requirement. This is not limited in this application.

For the cover plate 11, during specific application, the cover plate 11 may be made of a metal material such as aluminum, aluminum alloy, or steel, so that the cover plate 11 has good structural strength. During preparation, the cover plate 11 may be manufactured by using a stamping process, a cutting process, or the like. Certainly, in another example, the cover plate 11 may alternatively be made of a non-metal material such as resin. A specific material and a preparation process of the cover plate 11 are not limited in this application.

During specific implementation, structure types of the through hole 11a and the through hole 11b may be diversified. It should be noted that structures of the through hole 11a and the through hole 11b may be approximately the same. Therefore, the following describes the structure of the through hole 11a in detail by using the through hole 11a as an example.

As shown in FIG. 5, in an example provided in this application, a cross section shape of the through hole 11a is approximately circular, and the first anti-rotation surface 110a may be formed by disposing a protrusion structure on the inner wall of the through hole 11a.

Specifically, the first anti-rotation surface 110a is a plane, and an included angle between the first anti-rotation surface 110a and the inner wall of the through hole 11a is less than 180°. The included angle between the first anti-rotation surface 110a and the inner wall of the through hole 11a is an included angle between the first anti-rotation surface 110a and a section of the inner wall of the through hole 11a at a junction of the first anti-rotation surface 110a and the inner wall of the through hole 11a. The included angle between the first anti-rotation surface 110a and the inner wall of the through hole 11a is less than 180°, so that it can be ensured that the through hole 11a has a large enough cross-sectional area, and the positive pole 12 can smoothly penetrate through. It may be understood that during specific implementation, the included angle between the first anti-rotation surface 110a and the inner wall of the through hole 11a may be flexibly set based on an actual requirement. Details are not described herein.

In addition, a quantity and positions of first anti-rotation surfaces 110a may also be flexibly set.

For example, as shown in FIG. 5, in an example provided in this application, two first anti-rotation surfaces 110a are provided, and the two first anti-rotation surfaces 110a are symmetrically provided. It may be understood that, during specific implementation, one, three, or more first anti-rotation surfaces 110a may alternatively be provided. When a plurality of first anti-rotation surfaces 110a are provided, relative positions of the plurality of first anti-rotation surfaces 110a may be properly set based on an actual requirement.

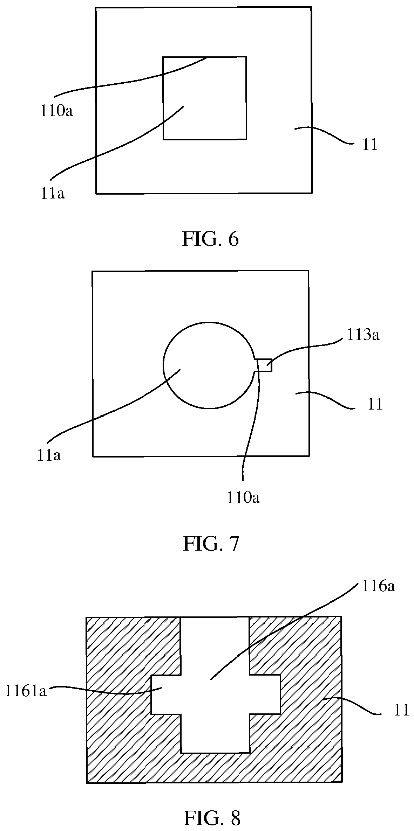

For example, as shown in FIG. 6, in an example provided in this application, four first anti-rotation surfaces 110a (only one is marked in the figure) are disposed, and the four first anti-rotation surfaces 110a are sequentially connected along a circumferential direction. Alternatively, it may be understood as that a cross section shape of the through hole 11a is a quadrilateral, and each side may be considered as a first anti-rotation surface 110a.

In addition, in some examples, the first anti-rotation surface 110a may alternatively be formed by disposing a recessed structure on the inner wall of the through hole 11a.

For example, as shown in FIG. 7, in another example provided in this application, a groove 113a is provided inside the through hole 11a, and the first anti-rotation surface 110a is located on a side wall of the groove 113a. That is, the side wall of the groove 113a may be used as the first anti-rotation surface 110a. When the injection molding part 13a has a trend of circumferential rotation with the positive pole 12a, the side wall of the groove 113a can resist the injection molding part 13a, to prevent the injection molding part 13a and the positive pole 12a from circumferentially rotating.

During specific setting, a quantity, positions, and sizes of grooves 113a may be flexibly set based on an actual requirement. Details are not described herein.

It may be understood that, in another example, the first anti-rotation surface 110a may alternatively be a folded surface, a curved surface, or the like. A specific shape of the first anti-rotation surface 110a is not limited in this application.

In addition, as shown in FIG. 5, in an example provided in this application, each end of the through hole 11a is provided with a chamfer 114a. A bonding area between the through hole 11a and the injection molding part 13a may be increased by providing the chamfer 114a, so that stability of a connection between the injection molding part 13a and the cover plate 11 can be effectively improved. The chamfer 114a may be specifically an oblique corner, a rounded corner, or the like. A specific shape and size of the chamfer 114a are not limited in this application.

Certainly, in another example, only both ends of the through hole 11a may be provided with chamfers 114a, and injection molding parts 13a all cover two chamfers 114a. Details are not described herein.

In addition, as shown in FIG. 4, in an example provided in this application, the first plate surface 111 of the cover plate 11 is provided with a boss 115a and a boss 115b. One end of the through hole 11a penetrates through a surface of the boss 115a, and the injection molding part 13a covers an edge of the boss 115a. One end of the through hole 11b penetrates through a surface of the boss 115b, and the injection molding part 13b covers an edge of the boss 115b.

Structures of the boss 115a and the boss 115b may be approximately the same, and structures of the injection molding part 13a and the injection molding part 13b may be approximately the same. Therefore, the following uses the boss 115a and the injection molding part 13a as an example for specific description.

As shown in FIG. 5, specifically, in an example provided in this application, an outer contour of the boss 115a is approximately a rectangle. After the injection molding part 13a covers the edge of the boss 115a, the bonding area between the injection molding part 13a and the cover plate 11 can be increased. This helps ensure the stability of the connection between the injection molding part 13a and the cover plate 11. In addition, a limiting function can be further implemented between the injection molding part 13a and the edge of the boss 115a, so that circumferential rotation between the injection molding part 13a and the cover plate 11 can be prevented.

During manufacturing, the boss 115a may be formed by using a stamping process. For example, during stamping, the second plate surface 112 may be squeezed to form a groove (not shown in the figure), so that the structure of the boss 115a may be formed on the first plate surface 111. Because the boss 115a is formed by squeezing, a volume of the groove is approximately equal to a volume of the boss 115a.

It may be understood that, in another example, the outer contour of the boss 115a may alternatively be a polygonal structure such as an ellipse or a triangle. Alternatively, it may be understood that an outer circumferential surface of the boss 115a is a surface that does not use an axis center of the through hole 11a as a rotation center.

In addition, as shown in FIG. 5, in an example provided in this application, the cover plate 11 is further provided with a counterbore 116a, and the injection molding part 13a may be located in the counterbore 116a, so that the bonding area between the injection molding part 13a and the cover plate 11 can be increased. This helps ensure the stability of the connection between the injection molding part 13a and the cover plate 11. In addition, a limiting function can be further implemented between the injection molding part 13a and the counterbore 116a, so that circumferential rotation between the injection molding part 13a and the cover plate 11 can be prevented.

As shown in FIG. 5, for example, four counterbores 116a are provided, and the four counterbores 116a are respectively provided at four corners of the boss 115a.

Certainly, in another example, the counterbore 116a may alternatively be provided on the first plate surface 111, that is, the counterbore 116a may not be provided on the boss 115a. Alternatively, in some examples, some counterbores 116a may be provided on the boss 115a, and some other counterbores 116a may not be provided on the boss 115a.

During specific setting, structures of the counterbore 116a may be diversified.

For example, as shown in FIG. 8, in an example provided in this application, the counterbore 116a is approximately a circular straight hole, and a recess portion 1161a is provided on a side wall of the counterbore 116a. The injection molding part 13a may cover the entire counterbore 116a. Because a cross-sectional area of the recess portion 1161a is greater than a cross-sectional area of another part of the counterbore 116a, a clamping connection can be further formed between the injection molding part 13a and the counterbore 116a, and strength of a connection between the injection molding part 13a and the counterbore 116a can be effectively improved.

Certainly, in another example, the counterbore 116a may alternatively be a straight-through hole, a stepped hole, a tapered hole, or the like. Details are not described herein.

In addition, when the positive pole 12a and the negative pole 12b are disposed, the structure types of the positive pole 12a and the negative pole 12b may also be diversified. It should be noted that the structures of the positive pole 12a and the negative pole 12b may be approximately the same. The following uses the positive pole 12a as an example for description.

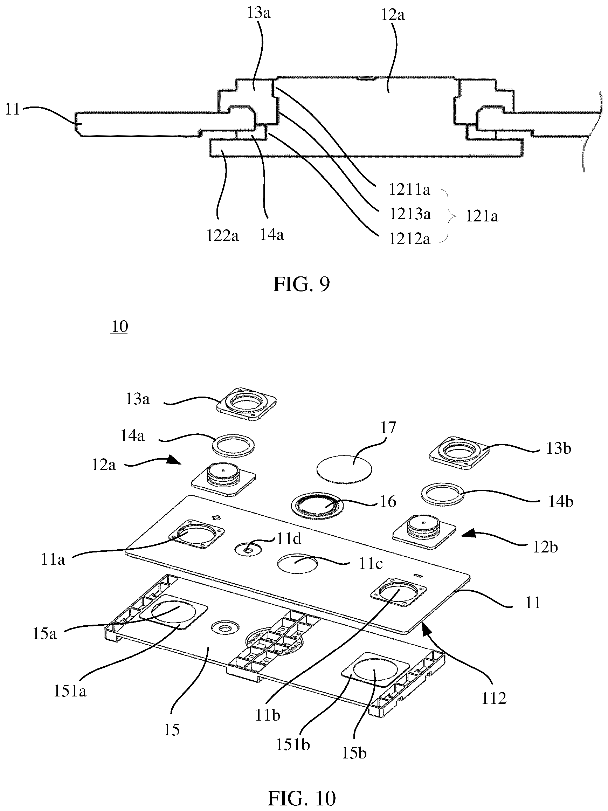

As shown in FIG. 5 and FIG. 9, in an example provided in this application, the positive pole 12a includes a pole body 121a, a first pole segment 1211a is disposed at a first end (an upper end in FIG. 5) of the pole body 121a, a second pole segment 1212a is disposed at a second end (a lower end in FIG. 5), a shrinking portion 1213a is provided between the first pole segment 1211a and the second pole segment 1212a, and a cross-sectional area of the shrinking portion 1213a is less than a cross-sectional area of the first pole segment 1211a and a cross-sectional area of the second pole segment 1212a. The injection molding body 13a covers the shrinking portion 1213a. Therefore, a clamping connection can be further formed between the injection molding part 13a and the positive pole 12a, so that strength of the connection between the injection molding part 13a and the counterbore positive pole 12a in an axial direction can be effectively improved.

In an example provided in this application, the second anti-rotation surface 120a is located on an outer circumferential surface of the first pole segment 1211a.

Certainly, in another example, the second anti-rotation surface 120a may alternatively be provided on an outer circumferential surface of the shrinking portion 1213a, or the second anti-rotation surface 120a is provided on both the first pole segment 1211a and the outer circumferential surface of the shrinking portion 1213a.

In addition, as shown in FIG. 5 and FIG. 9, in an example provided in this application, the pole 12a further includes a base 122a, and the base 122a is located on one side of the second pole segment 1212a of the pole body 121a.

As shown in FIG. 9, a sealing ring 14a is sleeved on a periphery of the second pole segment 1212a, one side of the sealing ring 14a is attached to a surface of the base 122a, and the other side of the sealing ring 14a is attached to the cover plate 11, to ensure sealing between the positive pole 12a and the cover plate 11.

When the cover plate 11 and the positive pole 12a are assembled, a first end of the positive pole 12a may be used as an insertion end to penetrate through the through hole 11a. Therefore, during actual application, a cross-sectional shape of the first pole segment 1211a may be approximately the same as a cross-sectional shape of the through hole 11a, and a cross-sectional area of the first pole segment 1211a should be less than a cross-sectional area of the through hole 11a, so that the positive pole 12a can smoothly penetrate through the through hole 11a.

Certainly, in another example, the cross-sectional shape of the first pole segment 1211a may be different from the cross-sectional shape of the through hole 11a. This is not limited in this application.

When the sealing ring 14a is disposed, the sealing ring 14a may be sleeved on a periphery of the second pole segment 1212a, so that the second pole segment 1212a can play a good positioning function for the sealing ring 14a.

In an example provided in this application, the second pole segment 1212a is cylindrical, the sealing ring 14a is of a circular ring structure, and a cross-sectional area of the second pole segment 1212a is greater than the cross-sectional area of the first pole segment 1211a. Specifically, when the sealing ring 14a is disposed, because an area of the base 122a is large, the sealing ring 14a may be sleeved from one end of the first pole segment 1211a. To prevent the first pole segment 1211a from blocking the sealing ring 14a, an outer contour of the first pole segment 1211a may be less than a contour of an inner ring of the sealing ring 14a. That is, the cross-sectional area of the first pole segment 1211a may be less than the cross-sectional area of the second pole segment 1212a.

In addition, during specific implementation, a thickness of the sealing ring 14a may be greater than a length of the second pole segment 1212a, to ensure that there is a sufficient creepage distance between the positive electrode 12a and the cover plate 11, to ensure safety and reliability of the cover plate assembly 10.

It should be noted that, as shown in FIG. 10, a sealing ring 14b is further provided, and shapes and functions of the sealing ring 14b and the sealing ring 14a may be approximately the same. Details are not described herein.

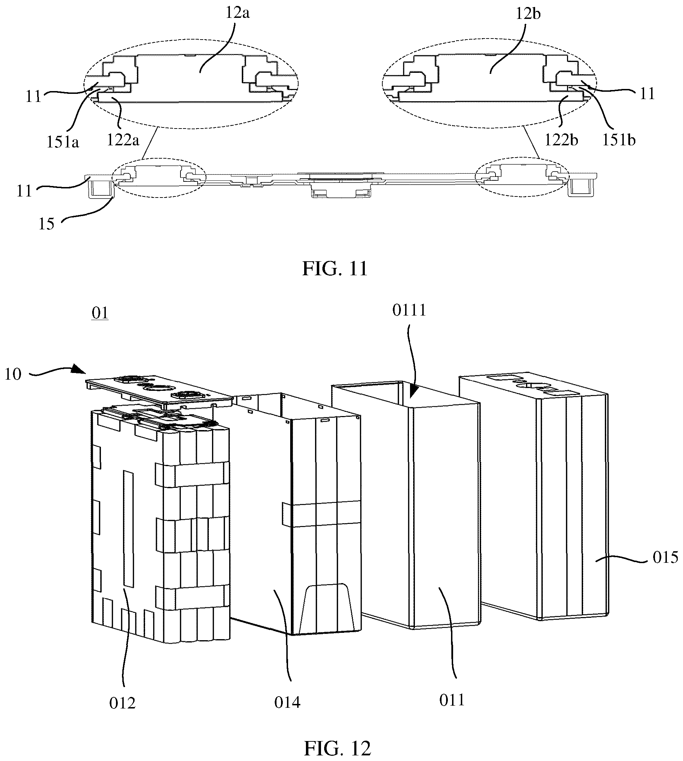

In addition, as shown in FIG. 10 and FIG. 11, in another example provided in this application, the battery cover plate assembly 10 may further include an isolation ring 15. The isolation ring 15 is usually made of a plastic material, and is approximately of a plate-shaped structure. The isolation ring 15 may be disposed on the second plate surface 112 to ensure insulation of the second plate surface 112 of the cover plate 11. When the battery cover plate assembly 10 covers an opening of a battery housing, the isolation ring 15 can keep insulation isolation between the cover plate 11 and a jelly roll or an electrolyte in the housing.

The isolation ring 15 is provided with a through hole 15a for the positive electrode 12a to penetrate and a through hole 15b for the negative electrode 12b to penetrate. The through hole 15a and the through hole 11a may be coaxially provided, and the through hole 15a and the through hole 11a may be coaxially disposed.

In addition, as shown in FIG. 11, a flange 151a is provided at the through hole 15a of the isolation ring 15, and the flange 151a is located between the base 122a and the cover plate 11, to implement a fixed connection between the isolation ring 15 and the cover plate 11. In addition, a flange 151b is provided at the through hole 15b of the isolation ring 15, and the flange 151b is located between the base 122b and the cover plate 11, to implement a fixed connection between the isolation ring 15 and the cover plate 11.

During specific implementation, the isolation ring 15 may be an integrated structure, so that a quantity of components of the battery cover plate assembly 10 can be reduced. Certainly, in another implementation, the isolation ring 15 may alternatively be a split structure. For example, the isolation ring 15 may include two parts that are symmetrical left and right. It may be understood that, during specific implementation, a commonly used type may be used for the isolation ring 15 currently. Details are not described herein.

In addition, the battery cover plate assembly 10 may further include another auxiliary structure.

For example, as shown in FIG. 10, in an example provided in this application, the battery cover plate assembly 10 may further include an explosion-proof structure 16. The explosion-proof structure 16 may be disposed between the cover plate 11 and the isolation ring 15. When atmospheric pressure inside the battery is excessively high, the explosion-proof structure 16 may implement pressure relief, to prevent an unfavorable condition such as explosion of the battery.

In FIG. 10, the cover plate 11 is provided with a through hole 11c that penetrates through the first plate surface 111 and the second plate surface 112, and one end (a lower end in FIG. 10) of the through hole 11c is in communication with the explosion-proof structure 16. In addition, to prevent a foreign object from falling into the through hole 11c and affecting a normal function of the explosion-proof structure 16, a protection patch 17 is disposed at one end (an upper end in the figure) of the through hole 11c.

During specific setting, the explosion-proof structure 16 may be a well-known conventional structure such as an explosion-proof film or an explosion-proof valve. Details are not described herein.

In addition, the cover plate 11 is further provided with a liquid injection hole 11d that penetrates through the first plate surface 111 and the second plate surface 112. During actual application, an electrolyte may be injected into the battery housing through the liquid injection hole 11d. After the liquid injection is completed, the liquid injection hole 11d may be sealed to ensure sealing of the battery.

In addition, as shown in FIG. 12, an embodiment of this application further provides a battery 01. The battery 01 may include a housing 011, a jelly roll 012, and a battery cover plate assembly 10. Specifically, the housing 011 is provided with a groove 0111, and the jelly roll 012 and an electrolyte may be disposed in the groove 0111. In addition, an isolation layer 014 is further disposed on an inner wall of the housing 011. A material of the isolation layer 014 is usually an insulation material such as nylon, to ensure insulation between the jelly roll 012 and the housing 011. In addition, an insulation layer 015 may be further disposed on an outer surface of the housing 011, to ensure insulation between the housing 011 and another external device or line.

During specific setting, a cover plate 11 and the housing 011 may be fastened in a manner of welding, bonding, or the like, or may be fastened by using a connecting piece such as a screw or a rivet. A manner of connecting the cover plate 11 and the housing 011 is not limited in this application.

It should be noted that the jelly roll 012 is an electrochemical cell including a positive electrode and a negative electrode, and a specific chemical composition and type of the jelly roll 012 are not limited in this application. Alternatively, the battery 01 may be of a type such as a lithium battery, a lead-acid battery, a lithium-sulfur battery, a sodium battery, a magnesium battery, an aluminum battery, or a potassium battery.

In addition, during specific application, a plurality of batteries 01 may be packaged for use, to meet a required power supply requirement.

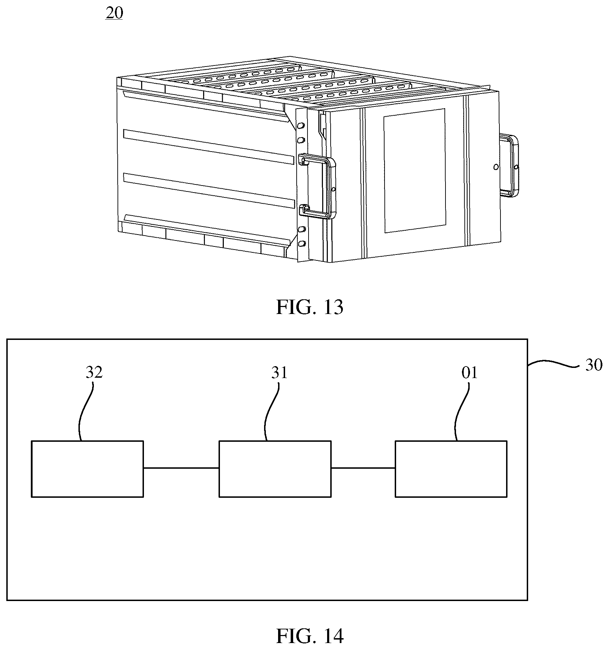

For example, as shown in FIG. 13, a battery pack 20 provided in this application may include a plurality of batteries (not shown in FIG. 13), and the plurality of batteries may be disposed in series or in parallel to meet a required power supply requirement.

In addition, as shown in FIG. 14, an embodiment of this application further provides a power system 30. The power system 30 may include an inverter 31, a power device 32, and any one of the foregoing batteries 01. The power device 32 may be connected to the battery 01 through the inverter 31. A type of electric energy in the battery 01 is usually a direct current, and a power consumption type of the power device 32 may be an alternating current. The inverter 31 may be configured to implement conversion between an alternating current and a direct current.

During specific application, the power device 32 may be a wind power generation apparatus, a solar power generation apparatus, or the like. Alternatively, it may be understood that the power system 30 may be a wind power system or a solar power system.

In addition, in some implementations, the power device 32 may alternatively be a power-consuming device such as a motor. A specific type of the power device is not limited in this application.

Alternatively, the battery 01 may be used in a terminal such as a mobile phone, a vehicle, a ship, an uncrewed aerial vehicle, or a base station, and is also used for power station energy storage, home energy storage, or the like. An application scenario of the battery is not limited in this application.

In addition, the power system 30 may further include a battery management system, and the battery management system may regulate and control a charging/discharging status of the battery 01, and the like. The battery management system may be disposed on a terminal or a remote end. For example, when the battery 01 is used in the vehicle, the battery management system may be installed in the vehicle, or the battery management unit may be disposed at a position such as a base station.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery cover plate assembly, comprising:
a cover plate, provided with a first plate surface and a second plate surface away from the first plate surface, wherein
the cover plate is provided with a through hole that passes through the first plate surface and the second plate surface, and an inner wall of the through hole is provided with a first anti-rotation surface;
a pole, penetrating through the through hole, wherein an outer circumferential surface of the pole is provided with a second anti-rotation surface; and
an injection molding part, fastened to the cover plate and the pole, and covering at least the first anti-rotation surface and the second anti-rotation surface.

2. The battery cover plate assembly according to claim 1, wherein the first anti-rotation surface is a plane, and an included angle between the first anti-rotation surface and the inner wall of the through hole is less than 180°.

3. The battery cover plate assembly according to claim 1 or 2, wherein at least one end of the through hole is provided with a chamfer.

4. The battery cover plate assembly according to any one of claims 1 to 3, wherein the first plate surface is provided with a counterbore, and the injection molding part is also located in the counterbore.

5. The battery cover plate assembly according to claim 4, wherein a side wall of the counterbore is provided with a recess portion.

6. The battery cover plate assembly according to any one of claims 1 to 5, wherein the first plate surface is provided with a boss, the through hole passes through the boss, and the injection molding part covers the boss.

7. The battery cover plate assembly according to any one of claims 1 to 6, wherein the pole comprises a pole body, a first pole segment is disposed at a first end of the pole body, a second pole segment is disposed at a second end, a shrinking portion is provided between the first pole segment and the second pole segment, and the injection molding body covers the shrinking portion.

8. The battery cover plate assembly according to claim 7, wherein the second anti-rotation surface is located on an outer circumferential surface of the first pole segment.

9. The battery cover plate assembly according to claim 8, wherein the pole further comprises a base, and the base is located at the second end of the pole body.

10. The battery cover plate assembly according to claim 9, further comprising a sealing ring, wherein the sealing ring is sleeved on a periphery of the second pole segment, and a thickness of the sealing ring is greater than a length of the second pole segment.

11. The battery cover plate assembly according to any one of claims 1 to 10, further comprising an isolation ring, and the isolation ring is located on the second plate surface.

12. A battery, comprising a housing and a jelly roll, wherein the housing is provided with a groove, and the jelly roll is disposed in the groove; and
further comprising the battery cover plate assembly according to any one of claims 1 to 11, wherein the battery cover plate assembly covers an opening of the groove, and the second plate surface faces the groove.

13. A power system, comprising an inverter and the battery according to claim 12, wherein the inverter is connected to the battery, and is configured to convert an alternating current into a direct current and then provide the direct current for the battery, or convert a direct current from the battery into an alternating current.
